# EUROPEAN PATENT SPECIFICATION

(11) **EP 1 140 695 B1**
(45) Date of publication and mention of the grant of the patent: **15.09.2010**
(21) Application number: 99947998.3
(22) Date of filing: 30.09.1999
(51) Int. Cl.: C01B 3/26

(54) **PRODUCTION OF HYDROGEN AND CARBON WITH A CARBON BLACK CATALYST**
VERFAHREN ZUR HERSTELLUNG VON WASSERSTOFF UND KOHLENSTOFF MIT EINEM AKTIVKOHLEKATALYSATOR
PRODUCTION D'HYDROGENE ET DE CARBONE A L'AIDE D'UN CATALYSEUR AU NOIR DE CARBONE

(30) Priority: 30.09.1998 NO 984560
(43) Date of publication of application: 10.10.2001
(73) Proprietor: Prototech AS, 5892 Bergen (NO)
(72) Inventor: ARILD, Vik, N-5258 Blomsterdalen (NO)
(74) Representative: Samuels, Adrian James
(86) International application number: PCT/NO1999/000299
(87) International publication number: WO 2000/021878

(56) References cited:
- EP-A1- 0 345 908
- WO-A1-98/40922
- WO-A2-98/08771
- DD-A1- 118 263
- US-A- 4 056 602
- US-A- 4 738 828
- US-A- 4 946 750
- US-A- 5 484 978

## Description

The invention includes method, device and application of energy efficient production of hydrogen and carbon by pyrolysis based on natural gas, methane or other organic gases as raw material. The present invention provides a method of producing hydrogen and carbon as set out in claim 1. It also provides apparatus for producing hydrogen and carbon as set out in claim 5. The method for precipitation of solid carbon uses finely distributed carbon dust as catalyst for the precipitation process. Carbon molecules from the gas attach to the catalytic particles causing growth of these to a trappable size. The catalytic material is regenerated by continuous supply of finely crushed carbon from the process.

The device is designed as a heat insulated reaction chamber with room for the catalytic material. The temperature in the reaction zone is controlled by means of supplied energy. Heating can also take place using alternative heat sources, and the system may therefore use excessive heat from high temperature processes as energy source for the complete- or parts of the process. The device has shown good efficiency in a temperature range from 400°C to 2000°C. The reaction rate and the purity of the final products can be controlled by optimisation of pressure and temperature.

In addition the invention covers the application of compact pyrolysis systems for use in vehicles, for pre-processing of gasses containing hydrocarbons and for fuel production for polymer fuel cells. The fuel cells utilise hydrogen as fuel and generate electrical power for propulsion of the vehicle. Both the pyrolysis system and the fuel cells can be designed compactly to fit ordinary vehicles.

The device and method is particularly well suited in environments with limited supply of hydrogen and oxygen, but with good energy supplies. An example of such environments is the vehicles and units that operate outside the earth's atmosphere.

Chemically clean carbon (carbon black) has been an important industrial product for many years. Large quantities are used in the production of car tires. The material is also used in paint products, in lubricants and in medical products. A number of methods for production of carbon from hydrocarbon gases have been developed during a period of years. Splitting of carbon and hydrogen from such gases is currently in focus from environmental reasons in connection with natural gas based production of electrical power. Also the space industry has interest in the hydrogen production as part of the water production in manned space journeys/stations.

A known method for splitting of hydrocarbons is the use of plasma arc. This method is described in US.Pat.no. 5,527,518. Another method is described in US.Pat.no. 4,631,180. Both methods involve combustion and use oxygen in the production.

A method for splitting of hydrocarbons is described in US.Pat.no. 5,198,084. This method is used for gasification of carbon containing material, and the gas is heated by means of microwave technology in a so-called plasma reactor.

The referred methods for splitting of hydrogen and carbon from hydrocarbons utilise different heating and combustion processes in atmospheres with insufficient oxygen supply. The method according to the invention significantly differs from these techniques by utilising carbon dust as catalyst for splitting of hydrocarbons in an oxygen free environment.

A patent DD 118263 over which the invention is characterised describes a method for pyrolysis where the carbon particles are used as catalyst. The particles are sent through a gas containing hydrogen which is heated to a temperature of 1000°C - 1800°C. The invention differs significantly from this by the fact that device and method is based on stationary carbon particles contained in a compact reaction chamber. This make it possible to produce a much more compact system compared to systems with moving particles or carbon deposition on surfaces. In addition, the new method is significantly more energy effective because the pyrolysis process operates at temperature down to 400°C.

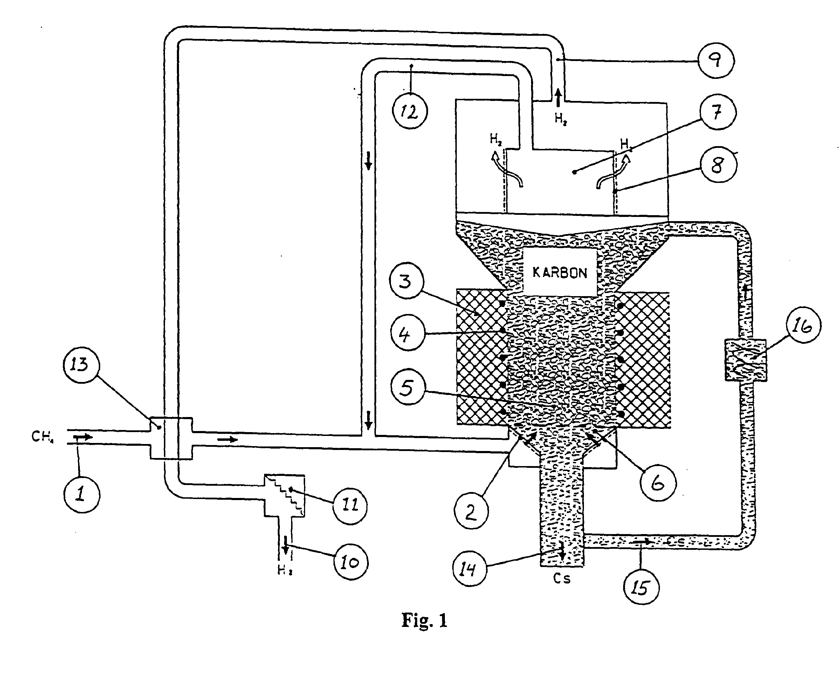

The method and device, according to the invention, are to be used in a process system for production of hydrogen and carbon based on natural gas, methane or other organic gases as raw material. A preferred embodiment of the present invention will now be described with reference to the schematic diagram in Fig.1. Gas (1) containing hydro carbons is guided through a filter (2), into a heat insulated reaction chamber (3) and heated by means of electrical heating coils or excessive heat from other high temperature processes. The temperature in the reaction chamber (3) is given an increasing gradient in the direction of flow (from bottom to top) from 300 to maximum 2000°C. The reaction chamber (3) contains finely distributed carbon dust (5) that acts as catalyst for the collection of solid carbon from the gas. The carbon molecules in the heated gas attach to the carbon dust (5) in a way that causes the catalytic particles to grow. The growing carbon particles are trapped by means of a mechanical system (for example a centrifuge) in the lower parts of the reaction chamber (6), when the grain size reaches a certain level. The carbon content in the gas gets a decreasing gradient upwards in the reaction chamber (3), and the gas contains mainly hydrogen at the top (12). The hydrogen-enriched gas is guided to a separation chamber (7), where parts of the gas are separated through a membrane filter (8). The permeate fraction of the gas (9) can be optimised with regard to the purity of the hydrogen. Before storage (10) the gas is guided through a filter (11) for removal of trace constituents. The retentate fraction of the gas (12) from the separation chamber (7) is returned to the inlet side of the reaction chamber.

On its way to the trace constituents filter (11) the processed gas (9) passes through a heat exchanger (13) for pre-heating of the feed gas (1). The exchange of heat between processed and feed gas induces a reduction in the need for energy supply to the system.

Trapping of granulated carbon takes place continuously in the lower parts of the reaction chamber (6). As the catalytic particles grow and get trapped the system needs supply of new catalytic material. According to the invention, catalytic material is continuously produced by recycling, crushing (16) and injection in the upper part of the reception chamber of a controlled fraction (15) of the separated carbon (14). This recycling process maintains an optimum balance with regard to the amount and size distribution of carbon particles.

## Claims

1. A method of producing hydrogen and carbon by pyrolysis of an organic gas (1) utilising carbon dust (5) as a catalyst for precipitation of carbon comprising stimulating carbon precipitation by guiding the gas (1) through a heated reaction chamber (3) where the carbon molecules from the gas can attach to the catalytic particles (5) causing growth of these to a pre-set size that can be mechanically trapped, **characterised by** guiding the gas exiting the reaction chamber to a separation chamber (7) comprising a membrane filter (8) to produce a permeate fraction and a retentate fraction; and returning said retentate fraction to the inlet side of the reaction chamber.

2. A method as claimed in claim 1 **characterised by** crushing a controlled amount of precipitated carbon (14) and returning the crushed carbon to the reaction chamber (3) in a continuous process for maintenance of an optimum balance with regard to the amount and size distribution of carbon particles.

3. A method as claimed in claim 1 or 2 comprising heating said reaction chamber using excess heat from another high temperature process.

4. A method as claimed in claim 1, 2 or 3 comprising heating said reaction chamber to a temperature of between 400 and 2000°C.

5. Apparatus for producing hydrogen and carbon in a closed process by pyrolysis of an organic gas utilising carbon dust as a catalyst for precipitation of carbon, said apparatus containing a thermally insulated reaction chamber (3) containing said carbon dust (5); means for heating said reaction chamber and means for passing said gas through the reaction chamber; **characterised in that** the apparatus further comprises a separation chamber (7) comprising a membrane filter (8) for separating said gas into a permeate fraction and a retentate fraction; and means for returning said retentate fraction to the inlet side of the reaction chamber.

6. Apparatus as claimed in claim 5 comprising means for controlling the temperature of said reaction chamber.

7. Apparatus as claimed in claim 5 or 6 comprising a heat exchanger (13) for transferring heat from gas (9) exiting said reaction chamber (3) to gas (1) entering the reaction chamber.

8. Apparatus as claimed in claim 5, 6 or 7 comprising means (16) for crushing precipitated carbon from the reaction chamber (3) and returning a proportion of said crushed carbon to the reaction chamber.

9. A vehicle comprising a polymer fuel cell for generating electrical power for propulsion of the vehicle, **characterised in that** the vehicle further comprises an apparatus as claimed in any of claims 5 to 8 for generating hydrogen fuel for said fuel cell.

## Patentansprüche

1. Verfahren zum Herstellen von Wasserstoff und Kohlenstoff mittels Pyrolyse eines organischen Gases (1) unter Verwendung von Kohlenstoffstaub (5) als Katalysator zur Fällung von Kohlenstoff umfassend die Stimulation der Kohlenstofffällung durch Führung des Gases (1) durch eine beheizte Reaktionskammer (3), in der sich die Kohlenstoffmoleküle von dem Gas an die Katalysatorpartikel (5) anlagern können, was ein Wachstum dieser auf eine vorbestimmte Größe bewirkt, die mechanisch eingefangen werden kann, **gekennzeichnet durch** ein Führen des Gases, das aus der Reaktionskammer austritt, zu einer Separationskammer (7), die einen Membranfilter (8) aufweist, um eine permeate bzw. durchdringende Fraktion und eine retentate bzw. zurückgehaltene Fraktion herzustellen; und das Zurückführen der retentaten Fraktion zu der Eintrittsseite der Reaktionskammer.

2. Verfahren nach Anspruch 1, **gekennzeichnet durch** das Zerstoßen einer kontrollierten Menge von gefälltem Kohlenstoff (14) und Zurückführen des zerstoßenem Kohlenstoffs zu der Reaktionskammer (3) in einem kontinuierlichen Prozess zum Erhalt eines optimalen Gleichgewichts im Hinblick auf die Menge und Größenverteilung von Kohlenstoffpartikeln.

3. Verfahren nach einem der Ansprüche 1 oder 2, das ein Beheizen der Reaktionskammer umfasst, wobei überschüssige Wärme aus einem anderen Hochtempereraturprozess verwendet wird.

4. Verfahren nach einem der Ansprüche 1, 2 oder 3, das ein Heizen der Reaktionskammer auf eine Temperatur zwischen 400 und 2000 °C umfasst.

5. Vorrichtung zum Herstellen von Wasserstoff und Kohlenstoff in einem geschlossenem Prozess durch Pyrolyse eines organischen Gases unter Verwendung von Kohlenstoffstaub als Katalysator zur Fällung von Kohlenstoff, wobei die Vorrichtung aufweist eine wärmegedämmte Reaktionskammer (3), die den Kohlenstaub (5) enthält; Mittel zum Beheizen der Reaktionskammer und Mittel zum Führen des Gases durch die Reaktionskammer; **dadurch gekennzeichnet, dass** die Vorrichtung ferner aufweist eine Separationskammer (7), die einen Membranfilter (8) zum Separieren des Gases in eine permeate bzw. durchdringende Fraktion und eine retentate bzw. zurückgehaltene Fraktion umfasst; und Mittel zum Zurückführen der retentaten Fraktion zu der Eintrittsseite der Reaktionskammer.

6. Vorrichtung nach Anspruch 5, die Mittel zum Steuern bzw. Regeln der Temperatur der Reaktionskammer aufweist.

7. Vorrichtung nach einem der Ansprüche 5 oder 6, die einen Wärmeaustauscher (13) zum Überführen von Wärme aus Gas (9), das die Reaktionskammer (3) verlässt, zu Gas (1), das in die Reaktionskammer eintritt, aufweist.

8. Vorrichtung nach einem der Ansprüche 5, 6 oder 7, die Mittel (16) zum Zerstoßen von gefälltem Kohlenstoff aus der Reaktionskammer (3) und Zurückführen eines Anteils des zerstoßenen Kohlenstoffs zu der Reaktionskammer aufweist.

9. Fahrzeug, das eine Polymerkraftstoffzelle zur Erzeugung elektrischer Energie zum Antreiben des Fahrzeugs aufweist, **dadurch gekennzeichnet, dass** das Fahrzeug ferner aufweist eine Vorrichtung nach einem der Ansprüche 5 bis 8 zum Erzeugen von Wasserstoffkraftstoff für die Kraftstoffzelle.

## Revendications

1. Procédé de production d'hydrogène et de carbone par pyrolyse d'un gaz organique (1) utilisant de la poussière de carbone (5) comme catalyseur pour la précipitation du carbone, comportant l'étape consistant à stimuler une précipitation du carbone en guidant le gaz (1) à travers une chambre de réaction chauffée (3) dans laquelle les molécules de carbone provenant du gaz peuvent se fixer aux particules catalytiques (5) en entraînant une croissance de celles-ci jusqu'à une taille prédéfinie qui peuvent être mécaniquement piégées, **caractérisé par** les étapes consistant à guider le gaz quittant la chambre de réaction jusqu'à une chambre de séparation (7) comportant un filtre à membrane (8) pour produire une fraction de perméat et une fraction de rétentat ; et renvoyer ladite fraction de rétentat vers le côté d'entrée de la chambre de réaction.

2. Procédé tel que revendiqué dans la revendication 1, **caractérisé par** les étapes consistant à broyer une quantité commandée de carbone précipité (14) et renvoyer le carbone broyé vers la chambre de réaction (3) dans un processus continu pour le maintien d'un équilibre optimal en ce qui concerne la quantité et la répartition en taille des particules de carbone.

3. Procédé tel que revendiqué dans la revendication 1 ou 2, comportant l'étape consistant à chauffer la chambre de réaction en utilisant de la chaleur en excès provenant d'un autre processus à haute température.

4. Procédé tel que revendiqué dans la revendication 1, 2 ou 3, comportant l'étape consistant à chauffer ladite chambre de réaction jusqu'à une température comprise entre 400 et 2 000 °C.

5. Dispositif pour produire de l'hydrogène et du carbone dans un processus fermé par pyrolyse d'un gaz organique utilisant de la poussière de carbone comme catalyseur pour la précipitation du carbone, ledit dispositif contenant une chambre de réaction thermiquement isolée (3) contenant ladite poussière de carbone (5) ; des moyens pour chauffer ladite chambre de réaction et des moyens pour faire passer ledit gaz à travers la chambre de réaction ; **caractérisé en ce que** le dispositif comporte en outre une chambre de séparation (7) comportant un film à membrane (8) pour séparer ledit gaz en une fraction de perméat et une fraction de rétentat ; et des moyens pour renvoyer ladite fraction de rétentat vers le côté d'entrée de la chambre de réaction.

6. Dispositif tel que revendiqué dans la revendication 5, comportant des moyens pour commander la température de ladite chambre de réaction.

7. Dispositif tel que revendiqué dans la revendication 5 ou 6, comportant un échangeur de chaleur (13) pour transférer de la chaleur provenant d'un gaz (9) quittant ladite chambre de réaction (3) vers un gaz (1) pénétrant dans la chambre de réaction.

8. Dispositif tel que revendiqué dans la revendication 5, 6 ou 7, comportant des moyens (16) pour broyer du carbone précipité provenant de la chambre de réaction (3) et renvoyer une proportion dudit carbone broyé vers la chambre de réaction.

9. Véhicule comportant une pile à combustible polymère pour générer du courant électrique pour une propulsion du véhicule, **caractérisé en ce que** le véhicule comporte également un dispositif tel que revendiqué dans l'une quelconque des revendications 5 à 8 pour générer du combustible à base d'hydrogène pour ladite pile à combustible.
